# EUROPÄISCHE PATENTSCHRIFT

(11) **EP 3 077 270 B1**
(45) Veröffentlichungstag und Bekanntmachung des Hinweises auf die Patenterteilung: **12.04.2017**
(21) Anmeldenummer: 14836959.8
(22) Anmeldetag: 04.12.2014
(51) Int. Cl.: B62D 1/16

(54) **LENKSÄULENANORDNUNG, MANTELROHR FÜR EINE LENKSÄULENANORDNUNG, UND FAHRZEUG MIT EINER LENKSÄULENANORDNUNG**
STEERING COLUMN ASSEMBLY, CASING TUBE FOR A STEERING COLUMN ASSEMBLY, AND VEHICLE HAVING A STEERING COLUMN ASSEMBLY
STRUCTURE DE COLONNE DE DIRECTION, TUBE ENVELOPPE POUR UNE STRUCTURE DE COLONNE DE DIRECTION, ET VÉHICULE ÉQUIPÉ D'UNE STRUCTURE DE COLONNE DE DIRECTION

(30) Priorität: 04.12.2013 DE 102013018149
(43) Veröffentlichungstag der Anmeldung: 12.10.2016
(73) Patentinhaber: Daimler AG, 70327 Stuttgart (DE)
(72) Erfinder: HEBENSTREIT, Axel, 70569 Stuttgart (DE); LÖFFLER, Hans-Dieter, 72766 Reutlingen (DE); MAUCH, Markus, 73773 Aichwald (DE)
(74) Vertreter: JENSEN & SON
(86) Internationale Anmeldenummer: PCT/EP2014/003237
(87) Internationale Veröffentlichungsnummer: WO 2015/082073

(56) Entgegenhaltungen:
- EP-B1- 1 572 519
- DE-U1-202006 015 310

## Beschreibung

Die Erfindung betrifft eine Lenksäulenanordnung gemäß Oberbegriff des Anspruchs 1, ein Mantelrohr gemäß Anspruch 8 und ein Fahrzeug gemäß Anspruch 9.

Es sind Lenksäulenanordnungen bekannt, die eine Lenkspindel und ein die Lenkspindel umgreifendes Mantelrohr aufweisen (EP 1 572 519 B1, DE 10 2007 060 631 A1). Die Lenkspindel ist relativ zu dem Mantelrohr um eine Längsachse drehbar gelagert. Es ist ein Schaltermodul vorgesehen, das typischerweise ein Gehäuse und eine an diesem in Form eines Federkäfigs weitgehend zentral vorgesehene Befestigungshülse aufweist, die - in radialer Richtung gesehen - komprimierbar ist. Der Federkäfig umgibt eine Einstecköffnung des Gehäuses für das Mantelrohr, sodass das Schaltermodul auf dieses aufsteckbar und auf dem Mantelrohr festklemmbar ist. Die Einstecköffnung des Gehäuses fluchtet mit einer Verschraubungsöffnung für eine Lenkradschraube, die von einer dem Federkäfig gegenüberliegenden Seite in das Gehäuse koaxial eingeschraubt wird. Eine Innenseite des die Einstecköffnung begrenzenden Gehäuses ist zu dem Mantelrohr hin leicht konisch erweitert ausgebildet und liegt an einer formnegativen Außenseite des Federkäfigs an. Der Federkäfig weist an seinem dem Lenkrad zugewandten Ende radial nach innen stehende Anschlagnasen auf, die dem Käfig beim Aufstecken auf das Mantelrohr eine definierte axiale Lage vorgeben. Zur Montage wird zunächst das Gehäuse mit dem Federkäfig auf das Mantelrohr aufgesteckt, sodann wird nach dem Aufstecken des Lenkrads die Lenkradschraube angezogen, wodurch das Gehäuse axial in Richtung des Mantelrohrs und relativ zu dem Federkäfig verschoben wird. Aufgrund der Konizität der Federkäfig-Außenseite und der Gehäuse-Innenseite entfaltet die Verschiebung dabei die Wirkung eines Keilgetriebes, wobei der Federkäfig - in radialer Richtung gesehen - elastisch komprimiert wird, und wobei sich dessen Federn an dem Mantelrohr verklemmen. Zusätzlich sind bevorzugt an den Federn kleine, messerartige Vorsprünge vorgesehen, die sich am Mantelrohr verkrallen. Dadurch, dass das Schaltermodul auf dem Mantelrohr festgeklemmt wird, wird eine axiale Fixierung desselben relativ zu dem Mantelrohr erreicht. Um das Schaltermodul auch in einer definierten Winkellage - im Umfangsrichtung gesehen - relativ zu dem Mantelrohr anzuordnen, sind in den Federkäfig federbelastete Raststeine eingelassen, die in Stecklage des Schaltermoduls in axiale Langlöcher des Mantelrohrs eintauchen. Wird der Federkäfig bei der Montage in radialer Richtung komprimiert, werden zugleich auch die Raststeine in die Langlöcher des Mantelrohrs gedrückt, wodurch die Verdrehsicherung des Schaltermoduls auf dem Mantelrohr gewährleistet wird. Insgesamt wird das Schaltermodul so - in axialer und in Umfangsrichtung gesehen - spielfrei auf dem Mantelrohr angeordnet.

Nachteilig an der bekannten Ausgestaltung ist, dass die Raststeine einen großen Bauraum in dem Gehäuse fordern, sodass zugleich der für das Mantelrohr zur Verfügung stehende Bauraum verkleinert wird. Infolgedessen sind die Steifigkeit und die Eigenfrequenz des Mantelrohrs begrenzt, was zusätzliche Vorkehrungen erforderlich macht, um einen Lenkkomfort für den Fahrer eines mit der Lenksäulenanordnung ausgestatteten Fahrzeugs zu gewährleisten. Hierbei sollen sich möglichst keine fühlbaren Vibrationen ergeben.

Des Weiteren ist aus der DE 20 2006 015 310 U1 eine verdrehsichere Verbindung eines Lenkstockschalters mit einem ortsfesten Mantelrohr bekannt, das zwei axial hintereinander liegende Ausstülpungen aufweist, die in zwei Nuten des Schaltergehäuses eingreifen, wobei eine der beiden Ausstülpungen als Positionierhilfe dient, während die andere Ausstülpung mit der entsprechenden Nut des Gehäuses die weitgehend spielfreie Verdrehsicherung bildet. Das Gehäuse wird mittels einer Spannschelle derart an das Mantelrohr gepresst, dass eine axiale Verschiebung des Gehäuses in Richtung des Mantelrohrendes verhindert wird.

Der Erfindung liegt die Aufgabe zugrunde, eine Lenksäulenanordnung, ein Mantelrohr und ein Fahrzeug zu schaffen, welche die genannten Nachteile nicht aufweisen. Insbesondere soll eine spielfreie und genau ausgerichtete Montage eines Schaltermoduls auf einem Mantelrohr möglich sein, wobei das Mantelrohr zugleich eine ausreichend hohe Steifigkeit und Eigenfrequenz aufweist, um einen hinreichenden Lenkkomfort für einen Fahrer des Fahrzeugs zu gewährleisten.

Die Aufgabe wird gelöst, indem eine Lenksäulenanordnung mit den Merkmalen des Anspruchs 1 geschaffen wird.

Die Lenksäulenanordnung weist eine Lenkspindel und ein diese umgreifendes Mantelrohr auf. Die Lenkspindel ist relativ zu dem Mantelrohr um eine Längsachse drehbar gelagert. Weiterhin weist die Lenksäulenanordnung ein Schaltermodul auf, welches seinerseits ein Gehäuse und eine an dem Gehäuse vorgesehene Befestigungshülse aufweist. Die Befestigungshülse ist so ausgebildet, dass das Schaltermodul mit der Befestigungshülse auf das Mantelrohr aufsteckbar und auf diesem festklemmbar ist. Die Lenksäulenanordnung zeichnet sich dadurch aus, dass das Mantelrohr an einer äußeren Umfangsfläche wenigstens einen radialen Vorsprung aufweist. Zugleich weist die Befestigungshülse an einer inneren Umfangsfläche wenigstens eine sich - in Längsrichtung gesehen - erstreckende Führungsnut auf, wobei der radiale Vorsprung in die Führungsnut eingreift, wenn das Schaltermodul auf das Mantelrohr aufgesteckt ist. Die axiale Festlegung des Schaltermoduls auf dem Mantelrohr erfolgt durch Festklemmen der Befestigungshülse auf dem Mantelrohr. Die Drehsicherung wird nun jedoch dadurch bewirkt, dass wenigstens ein an dem Mantelrohr vorgesehener Vorsprung, der von einer äußeren Umfangsfläche desselben radial vorspringt, in eine Führungsnut eingreift, welche an einer inneren Umfangsfläche der Befestigungshülse vorgesehen ist. Die Befestigungshülse ist dagegen bevorzugt frei von Raststeinen ausgebildet, die einer Ausrichtung in Umfangsrichtung dienen. Vielmehr wird die Funktion der üblicherweise an der Befestigungshülse oder dem Federkäfig vorgesehenen Raststeine nunmehr von dem Mantelrohr, insbesondere von dessen wenigstens einem radialen Vorsprung, übernommen, sodass die ansonsten für die Raststeine vorgesehenen Aufnahmeräume in dem Gehäuse entfallen können. Dies wiederum hat zur Folge, dass das Mantelrohr mit einem größeren Durchmesser ausgebildet werden kann, was eine erhebliche Steifigkeitserhöhung und eine Steigerung von dessen Eigenfrequenz ermöglicht. Der wenigstens eine Vorsprung an dem Mantelrohr kann nämlich vergleichsweise kompakt ausgebildet werden und benötigt nur wenig Bauraum. Die vorgeschlagene Lenksäulenanordnung verwirklicht eine spielfreie und ausgerichtete Verbindung zwischen dem Schaltermodul und der Lenksäule, die auch dauerhaft hohen Drehmomenten standhält.

Mit einer Längsrichtung oder einer axialen Richtung ist hier und im Folgenden eine Richtung angesprochen, die parallel zu der Drehachse der Lenkspindel verläuft, vorzugsweise mit dieser zusammenfällt. Eine radiale Richtung steht senkrecht auf der Längsrichtung. Mit einer Umfangsrichtung ist eine Richtung angesprochen, welche die Längsrichtung konzentrisch umgreift.

Die Lenksäulenanordnung ist bevorzugt vorgesehen zur Verwendung in einem Fahrzeug, insbesondere in einem Kraftfahrzeug. Hierzu ist bevorzugt ein Lenkrad mit der Lenkspindel verbindbar, insbesondere auf eine Drehmomentübertragungsstruktur der Lenkspindel, beispielsweise eine Verzahnung, aufsteckbar und mit einer Lenkradschraube an der Lenkspindel befestigbar.

Erfindungsgemäß weist zudem die Führungsnut - im Querschnitt gesehen - eine trapezförmige Kontur auf. Dies bedeutet, dass sich in Längsrichtung erstreckende Seitenwandungen der Führungsnut zumindest bereichsweise nicht parallel zueinander orientiert sind, sondern vielmehr schräg zueinander verlaufen, wobei sich ihr Abstand radial nach außen, also zu größeren radialen Abständen von der Längsachse hin, verringert. Es ist möglich, dass die Seitenwandungen der Führungsnut im Wesentlichen parallel zueinander orientiert sind, wobei aber an einer Kante der Seitenwandungen zu einem Nutgrund hin eine Fase vorgesehen ist, sodass sich in diesem Bereich schräge Wandabschnitte ergeben. Die trapezförmige Kontur der Führungsnut hat den Vorteil, dass bei einer Kompression der Befestigungshülse Längsseiten oder Längskanten des Vorsprungs, die in Längsrichtung des Mantelrohrs verlaufen, von den schrägen Seitenwandungen oder Wandabschnitten der Führungsnut geklemmt werden, wodurch das radiale Spiel des Vorsprungs in der Führungsnut gänzlich aufgehoben wird. Dies ist ein großer Vorteil im Vergleich zu der bekannten Anordnung, bei welcher ein in dem Gehäuse des Schaltermoduls gehaltener Raststein in eine Nut in dem Mantelrohr eingreift, weil bei einer solchen Lösung keine entsprechende Klemmwirkung erzielbar ist, sodass das radiale Spiel nicht vollkommen beseitigt werden kann. Im Gegenteil ergibt sich in diesem Fall - wenn überhaupt - nur eine unzureichende Eliminierung des radialen Spiels. Durch die hier vorgeschlagene Anlage der schrägen Seitenwandungen oder Wandabschnitte an der länglichen Kontur des Vorsprungs werden dagegen eine steifere Lagerung des Schaltermoduls auf dem Mantelrohr und damit auch eine Erhöhung der Eigenfrequenz der Lenksäulenanordnung geschaffen.

Bei einem bevorzugten Ausführungsbeispiel der Lenksäulenanordnung ist die Befestigungshülse an dem Gehäuse angeordnet, insbesondere an diesem befestigt. Das Gehäuse ist vorzugsweise als Kunststoffgehäuse ausgebildet, wobei die Befestigungshülse bevorzugt ein Metall oder eine Metalllegierung umfasst, vorzugsweise aus einem Metall oder einer Metalllegierung besteht. Es ist aber auch ein Ausführungsbeispiel möglich, bei welchem die Befestigungshülse einstückig mit dem Gehäuse oder als Teil des Gehäuses ausgebildet ist.

Bei einem bevorzugten Ausführungsbeispiel der Lenksäulenanordnung ist die Befestigungshülse - in radialer Richtung gesehen - komprimierbar. Bevorzugt ist sie als Federkäfig ausgebildet. Insbesondere ist die Befestigungshülse vorzugsweise im Wesentlichen zylindrisch, bevorzugt zylindrisch, ausgebildet, wobei sie an einer dem Mantelrohr zugewandten und einem Lenkrad abgewandten Seite wenigstens einen randoffenen Längsschlitz aufweist, sodass mindestens zwei durch den Längsschlitz getrennte Federzungen an der Befestigungshülse ausgebildet sind, die - in radialer Richtung gesehen - einschwenken können. Mit den Federzungen ist die Befestigungshülse auf dem Mantelrohr festklemmbar. Dazu weist sie insbesondere bevorzugt einen Innendurchmesser auf, der geringfügig größer ist als ein Außendurchmesser des Mantelrohrs, sodass die Befestigungshülse ohne zu klemmen auf das Mantelrohr aufgesteckt und dann durch radiale Komprimierung auf diesem festgeklemmt werden kann.

Alternativ ist es möglich, dass die Befestigungshülse mindestens zwei, vorzugsweise drei oder auch mehr Klemmbacken trägt, mit denen das Schaltermodul auf dem Mantelrohr festklemmbar ist.

Vorzugsweise weist die Befestigungshülse an ihrem in montiertem Zustand einem Lenkrad zugewandten Ende einen Anschlag, insbesondere wenigstens eine in radialer Richtung nach innen ragende Anschlagnase auf. Der Anschlag ist vorgesehen, um der Befestigungshülse beim Aufstecken auf das Mantelrohr eine definierte axiale Lage vorzugeben. Es ist auch möglich, dass die Befestigungshülse einen Ringbund aufweist, der den Anschlag an einem in montiertem Zustand dem Lenkrad zugewandten Ende des Mantelrohrs definiert. Es ist auch möglich, dass die Befestigungshülse eine Mehrzahl von Anschlagnasen, vorzugsweise mindestens drei, besonders bevorzugt genau drei Anschlagnasen aufweist.

Der radiale Vorsprung an dem Mantelrohr ist vorzugsweise als höckerartige Erhebung ausgebildet. Weiterhin sind der radiale Vorsprung und die Führungsnut vorzugsweise derart aufeinander abgestimmt, dass sie zum einen bereits beim Aufstecken der Befestigungshülse auf das Mantelrohr ineinandergreifen, sodass das Schaltermodul auf dem Mantelrohr bereits vor dem Festklemmen in Umfangsrichtung festgelegt ist, wobei zum anderen der radiale Vorsprung in die Führungsnut im Wesentlichen spielfrei, vorzugsweise spielfrei eingreift, sodass das Schaltermodul auf dem Mantelrohr - in Umfangsrichtung gesehen - im Wesentlichen kein Spiel, vorzugsweise kein Spiel aufweist.

Diese Spielfreiheit ist nicht nur für den Lenkkomfort des Fahrers eines Fahrzeugs sehr wichtig, sondern auch essenziell zur Gewährleistung der Funktionsfähigkeit eines vorzugsweise in das Schaltermodul integrierten Lenkwinkelsensors. Dieser ist wesentlicher Bestandteil einer in dem Fahrzeug bevorzugt vorgesehenen Müdigkeitserkennung, die ausgebildet ist, um eine Ermüdung des Fahrers zu erkennen und diesen rechtzeitig zu warnen. Daher ist die möglichst spielfreie, vorzugsweise spielfreie Anordnung des Schaltermoduls auf dem Mantelrohr - in Umfangsrichtung gesehen - auch wichtig für die Sicherheit des Fahrzeugs.

Es wird ein Ausführungsbeispiel der Lenksäulenanordnung bevorzugt, das sich dadurch auszeichnet, dass der Vorsprung eine längliche Form aufweist. Dies bedeutet, dass eine Erstreckung des Vorsprungs in Längsrichtung größer ist als eine Erstreckung des Vorsprungs in Umfangsrichtung. Der Vorsprung ist also länger als breit. Bevorzugt beträgt seine Länge mindestens das Doppelte seiner Breite, besonders bevorzugt mindestens das Dreifache. Auf diese Weise wird sichergestellt, dass in den Vorsprung eingeleitete, in Umfangsrichtung wirkende Kräfte sicher und stabil von diesem aufgenommen werden, was zum einen die Genauigkeit der Festlegung der Anordnung des Schaltermoduls auf dem Mantelrohr - in Umfangsrichtung gesehen - steigert, und zum anderen die Steifigkeit der Anordnung erhöht.

Es wird auch ein Ausführungsbeispiel der Lenksäulenanordnung bevorzugt, die sich dadurch auszeichnet, dass der Vorsprung einstückig mit dem Mantelrohr ausgebildet ist. Bevorzugt ist der Vorsprung an der äußeren Umfangsfläche ausgeprägt, insbesondere von innen nach außen ausgeprägt, teilweise ausgestanzt oder ausgeformt. Der Vorsprung ist so in besonders einfacher und kostengünstiger Weise an dem Mantelrohr darstellbar, ohne dass es zusätzlicher Verfahrensschritte zur Montage des Vorsprungs und eines logistischen Mehraufwands zur Lagerung und Montage separater Elemente bedarf.

Es ist allerdings auch ein Ausführungsbeispiel der Lenksäulenanordnung möglich, bei dem der Vorsprung alternativ als separates Element auf dem Mantelrohr befestigt ist. Insbesondere ist es möglich, dass der Vorsprung an das Mantelrohr, insbesondere an die äußere Umfangsfläche desselben, angelötet, angeschweißt, angeklebt oder in anderer geeigneter Weise dort befestigt ist. Es ist auch möglich, dass der Vorsprung Kunststoff umfasst oder aus Kunststoff besteht, wobei er mithilfe einer Kunststoffanspritzung insbesondere an der äußeren Umfangsfläche befestigt, mithin angespritzt ist. Die zweiteilige Ausbildung des Mantelrohrs und des Vorsprungs ermöglicht eine verschiedene Materialwahl für diese Elemente, sodass die verwendeten Materialien auf die verschiedenen Aufgaben und Funktionalitäten der Elemente abgestimmt werden können. Darüber hinaus ist die Form des Vorsprungs noch genauer definierbar, wenn dieser als separates Element gefertigt und anschließend mit dem Mantelrohr gefügt beziehungsweise an diesem befestigt wird. Es wird auch ein Ausführungsbeispiel der Lenksäulenanordnung bevorzugt, das sich dadurch auszeichnet, dass das Mantelrohr mindestens zwei Vorsprünge aufweist. Dies verbessert die Abstützung von insbesondere in Umfangsrichtung wirkenden Kräften und führt insgesamt zu einer stabileren Verbindung zwischen dem Mantelrohr und dem Schaltermodul.

Vorzugsweise sind wenigstens zwei Vorsprünge - entlang einer Durchmesserlinie des Mantelrohrs gesehen - einander gegenüberliegend angeordnet. Das Mantelrohr weist dann wenigstens zwei diametral gegenüberliegende Erhebungen auf. Dies hat den Vorteil, dass von dem Schaltermodul in das Mantelrohr oder umgekehrt eingeleitete Drehmomente besonders gleichmäßig übertragen werden. Eine solche Ausgestaltung wird insbesondere dann bevorzugt, wenn ein die Lenksäulenanordnung umfassendes Cockpit des Fahrzeugs so in einen Fahrgastraum hineinragt, dass ein Einbau des Schaltermoduls nur in einer Position möglich ist, sodass es keiner weiteren Definition der Position mehr bedarf.

Alternativ oder zusätzlich sind die wenigstens zwei Vorsprünge vorzugsweise so angeordnet, dass sie - in Umfangsrichtung gesehen - zueinander versetzt sind. Sie weisen dabei insbesondere - in Umfangsrichtung gemessen - einen Winkel zueinander auf, der sowohl von 0° als auch von 180° verschieden ist. Dies hat den Vorteil, dass aufgrund des Versatzes und der hierdurch verwirklichten Symmetriebrechung nur noch eine einzige Montagemöglichkeit für das Schaltermodul auf dem Mantelrohr besteht. Umfasst das Mantelrohr mehr als zwei Vorsprünge, sind diese insgesamt bevorzugt asymmetrisch über den Umfang des Mantelrohrs verteilt. Dabei ist es sehr wohl möglich, dass sich zwei der Vorsprünge diametral gegenüberliegen, wobei ein dritter Vorsprung mit einem Versatz vorgesehen ist. Sind genau zwei Vorsprünge vorgesehen, weisen diese bevorzugt einen nur geringen Versatz von der diametralen Anordnung auf, sodass zwar aufgrund der Symmetriebrechung nur eine einzige Montagemöglichkeit besteht, zugleich jedoch noch eine sehr gleichmäßige Drehmomenteinleitung von dem Schaltermodul in das Mantelrohr gewährleistet wird.

Alternativ oder zusätzlich sind bevorzugt wenigstens zwei Vorsprünge vorgesehen, wobei die Vorsprünge - in Längsrichtung gesehen - zueinander versetzt angeordnet sind. Es ist also - gegebenenfalls zusätzlich zu einem Versatz in Umfangsrichtung und/oder einer diametralen Anordnung - ein Versatz in Längsrichtung vorgesehen, wodurch sich eine axiale Verlängerung der Abstützung zwischen dem Schaltermodul und dem Mantelrohr ergibt. Auftretende Kräfte oder Drehmomente werden so über einen größeren Längenbereich verteilt von dem Schaltermodul in das Mantelrohr oder umgekehrt eingeleitet, woraus sich eine insgesamt bessere Abstützung und steifere Anordnung ergibt.

Vorzugsweise weist die Befestigungshülse wenigstens zwei, bevorzugt eine Mehrzahl von Führungsnuten auf, wobei jeder Führungsnut wenigstens ein Vorsprung zugeordnet ist. Die in Umfangsrichtung und/oder in Längsrichtung zueinander versetzten Vorsprünge greifen also bevorzugt jeder in eine ihm zugeordnete - nämlich in radialer Richtung gegenüberliegende - Führungsnut der Befestigungshülse ein.

Besonders bevorzugt wird ein Ausführungsbeispiel der Lenksäulenanordnung, bei welchem wenigstens zwei Vorsprünge vorgesehen sind, die - in Längsrichtung gesehen - ohne Versatz in Umfangsrichtung hintereinander angeordnet sind, sodass sie in die gleiche Führungsnut der Befestigungshülse eingreifen. Dies dient in besonderer Weise der verlängerten Abstützung des Schaltermoduls auf dem Mantelrohr, woraus sich eine besonders hohe Steifigkeit ergibt.

Eine besonders günstige Befestigung mit hoher Steifigkeit ergibt sich dann, wenn eine Mehrzahl länglicher Vorsprünge auf dem Mantelrohr zueinander axial und/oder in Umfangsrichtung versetzt vorgesehen sind, die in entsprechend zugeordnete Führungsnuten an der Befestigungshülse eingreifen. Bevorzugt sind wenigstens zwei Vorsprünge vorgesehen, die paarweise zueinander nur in Längsrichtung, nicht jedoch in Umfangsrichtung versetzt sind. Weiterhin sind bevorzugt alternativ oder zusätzlich wenigstens zwei Vorsprünge vorgesehen, die paarweise zueinander nur in Umfangsrichtung, nicht jedoch in Längsrichtung versetzt sind. Bevorzugt sind alternativ oder zusätzlich wenigstens zwei Vorsprünge vorgesehen, die paarweise zueinander sowohl in Umfangsrichtung als auch in Längsrichtung versetzt angeordnet sind.

Es ist möglich, dass die Klemmkraft an dem Vorsprung - insbesondere dann, wenn eine Mehrzahl von Vorsprüngen, die axial und/oder in Umfangsrichtung zueinander versetzt sind - so groß wird, dass es einer darüber hinausgehenden Klemmung durch Federzungen eines Federkäfigs nicht mehr bedarf. Insbesondere bedarf es dann keiner üblicherweise an den Federzungen radial innen vorgesehenen Vorsprüngen mehr, die sich punktuell auf dem Mantelrohr festkrallen. Vielmehr ist nur noch die Gestaltung der komprimierbaren Befestigungshülse mit den an dieser ausgebildeten Führungsnuten erforderlich, wobei durch die Klemmung der Vorsprünge in den Führungsnuten eine - in Längsrichtung gesehen - stabilere und verlängerte Abstützung bewirkt wird, als dies der Fall ist, wenn sich die Federzungen punktuell über radial innen an ihnen angeordnete Vorsprünge abstützen. Somit wird nicht nur die Festlegung in Umfangsrichtung verbessert und spielfrei verwirklicht, sondern es wird auch die axiale Festlegung sicherer und fester ausgestaltet.

Es wird auch ein Ausführungsbeispiel der Lenksäulenanordnung bevorzugt, das sich dadurch auszeichnet, dass das Schaltermodul wenigstens ein Rastelement aufweist, das von radial außen in die wenigstens eine Führungsnut eingreift und - in radialer Richtung gesehen - verlagerbar gehalten ist. Dabei ist das Rastelement radial nach innen - also zur Längsachse hin - federbelastet, vorzugsweise vorgespannt, wobei es mit dem Vorsprung zur axialen Verrastung des Schaltermoduls auf dem Mantelrohr zusammenwirkt. Vorzugsweise ist dabei das wenigstens eine Rastelement in dem Gehäuse des Schaltermoduls gehalten oder gelagert. Das Rastelement dient insbesondere dazu, bei der Montage des Schaltermoduls ein Abfallen von dem Mantelrohr zu verhindern. Wird das Schaltermodul auf das Mantelrohr gesteckt, verhindert das Rastelement, das bevorzugt an dem Gehäuse innenseitig gehalten ist, dass das Schaltermodul von dem Mantelrohr abfallen kann, bevor es auf diesem festgeklemmt ist. Hierzu ist vorzugsweise vorgesehen, dass das Rastelement beim Zusammenschieben des Schaltermoduls und des Mantelrohrs hinter zumindest einem Vorsprung des Mantelrohrs einrastet. Beim Zusammenschieben wird das Rastelement, das in radialer Richtung federbelastet oder vorgespannt ist, von dem Vorsprung angehoben, wobei es - in Längsrichtung gesehen - hinter dem Vorsprung in seine entspannte oder vorgespannte Ausgangslage zurückfällt. Es führt also insgesamt eine radiale Hubbewegung aus.

Vorzugsweise ist an dem Rastelement zur Erleichterung der Anhebebewegung eine erste Schrägfläche mit relativ geringer Steigung vorgesehen, die besonders bevorzugt komplementär zu einer stirnseitigen ersten Anlauffläche des Vorsprungs ausgebildet ist. Beim Aufschieben des Schaltermoduls auf das Mantelrohr gleitet die erste Schrägfläche auf der ersten Anlauffläche, wobei das Rastelement - in radialer Richtung - angehoben wird. Auf seiner - in Längsrichtung gesehen - der ersten Schrägfläche abgewandten Seite weist das Rastelement vorzugsweise eine zweite Schrägfläche mit einer deutlich höheren Steigung auf, wodurch eine Abzugsbewegung des Schaltermoduls von dem Mantelrohr erschwert wird. Auch der Vorsprung weist vorzugsweise auf der in aufgestecktem Zustand dem Rastelement zugewandten Seite eine entsprechend steilere, zweite Anlauffläche auf, sodass insgesamt das Aufstecken des Schaltermoduls sehr viel leichter ist als das Abziehen desselben. Auf diese Weise wird durch die Verrastung des Rastelements hinter dem Vorsprung eine zumindest erste Sicherung des Schaltermoduls auf dem Mantelrohr bewirkt, bevor dieses auf dem Mantelrohr festgeklemmt wird. Vorzugsweise weist das Schaltermodul eine Mehrzahl von Rastelementen auf, die mit einer Mehrzahl von Vorsprüngen zur axialen Verrastung des Schaltermoduls auf dem Mantelrohr zusammenwirken.

Bei einem bevorzugten Ausführungsbeispiel der Lenksäulenanordnung ist das Rastelement mit einem Stift verbunden, der - in radialer Richtung gesehen - in dem Gehäuse verlagerbar geführt ist. Dabei ist der Stift so angeordnet und ausgebildet, dass er eine Durchgangsbohrung des Gehäuses nach außen durchgreift, wenn das Rastelement - in Längsrichtung gesehen - auf Höhe des Vorsprungs angeordnet ist, und dass er die Durchgangsbohrung nicht durchgreift, wenn das Rastelement - in Längsrichtung gesehen - vor oder hinter dem Vorsprung angeordnet ist. Bevorzugt wird das Rastelement von einem Raststein gebildet, an dem oberseitig ein Stift befestigt ist, der in einer an der Gehäuseinnenseite angeordneten Buchse oder einem Doppellager führbar gelagert ist. Der Stift weist bevorzugt einen Anschlag auf, der ein Herausfallen aus der Buchse oder dem Lager verhindert. Vorzugsweise trägt der Stift eine Druckfeder, welche sich einerseits an dem Raststein und andererseits an der Buchse oder dem inneren Lager des Doppellagers abstützt.

An dem Gehäuse des Schaltermoduls ist die Durchgangsbohrung ausgebildet, die mit dem Stift fluchtet, und deren Durchmesser bevorzugt größer ist als ein dem Raststein gegenüberliegendes Ende des Stiftes. Wird das Schaltermodul auf das Mantelrohr gesteckt und führt das Rastelement in Kontakt mit dem Vorsprung seine radiale Hubbewegung aus, führt zugleich auch der mit dem Rastelement befestigte Stift eine radiale Hubbewegung aus. Dabei taucht das Ende des Stiftes durch die Durchgangsbohrung des Gehäuses hindurch und wird so von außen für einen Werker sichtbar. Hinter dem Vorsprung - in Längsrichtung gesehen - fällt der Raststein und damit auch der Stift wiederum nach innen in das Gehäuse zurück, wenn er hinter dem Vorsprung einrastet. Vorzugsweise schließt dann der Stift mit seinem dem Rastelement abgewandten Ende bündig mit der Durchgangsbohrung ab. Bevorzugt ist das dem Rastelement gegenüberliegende Ende des Stifts farbig markiert.

Ein Werker, der das Schaltermodul auf das Mantelrohr steckt, kann so anhand des Stiftes sehen, aufgrund des Rastgeräuschs hören, und auch haptisch erfühlen, wann die richtige Montageposition, das heißt die richtige Relativlage des Schaltermoduls zu dem Mantelrohr und damit auch zu der Lenkspindel, erreicht ist.

Ist diese korrekte Relativlage erreicht, kann das Schaltermodul auf dem Mantelrohr festgeklemmt werden.

Die korrekte Montageposition wird demnach einem Werker haptisch, akustisch und optisch rückgemeldet, ohne dass hierfür zusätzliche Befestigungsmittel oder Montageumlaufteile verwendet werden.

Bei einem bevorzugten Ausführungsbeispiel der Lenksäulenanordnung weist das Schaltermodul ein Keilgetriebe auf, durch welches die Befestigungshülse auf dem Mantelrohr festklemmbar ist. In diesem Fall weist das Gehäuse bevorzugt eine erste Keilfläche auf, wobei die Befestigungshülse eine zweite Keilfläche aufweist, wobei die Keilflächen so zueinander angeordnet und orientiert sind, dass die Befestigungshülse auf dem Mantelrohr festgeklemmt wird, wenn das Gehäuse relativ zu der Befestigungshülse und relativ zu dem Mantelrohr in Richtung der Längsachse von einem einem Lenkrad zugewandten Ende der Lenkspindel wegverlagert wird. Erfindungsgemäß wird das Schaltermodul dann auf das Mantelrohr geklemmt, indem der Werker das Lenkrad auf die Lenkspindel aufsetzt und die Lenkradschraube anzieht, wodurch sich zugleich die zuvor beschriebene Relativbewegung zwischen dem Gehäuse und der Befestigungshülse ergibt, wodurch diese radial komprimiert und damit auf das Mantelrohr geklemmt wird. Dies wird durchgeführt, bis absolute Spielfreiheit - in Umfangsrichtung und Längsrichtung gesehen - zwischen dem Schaltermodul und dem Mantelrohr gegeben ist.

Es zeigt sich, dass die Befestigungshülse vorzugsweise relativ zu dem Gehäuse verlagerbar an dem Gehäuse vorgesehen, insbesondere an dem Gehäuse angeordnet beziehungsweise befestigt ist. Insbesondere sind die Befestigungshülse und das Gehäuse bevorzugt so miteinander verbunden, dass sie - in Längsrichtung gesehen - relativ zueinander verlagerbar sind. In diesem Fall ist eine Verlagerung des Gehäuses relativ zu der Befestigungshülse möglich, bei welcher eine erste Keilfläche des Gehäuses auf einer zweiten Keilfläche der Befestigungshülse gleitet, sodass insgesamt ein Keilgetriebe verwirklicht wird, durch welches die Befestigungshülse radial komprimiert und damit auf das Mantelrohr geklemmt wird.

Alternativ ist ein Ausführungsbeispiel möglich, bei welchem das Schaltermodul einen Klemmring zum Festklemmen der Befestigungshülse aufweist. Der Klemmring wird dann vorzugsweise an einem dem Lenkrad abgewandten Ende der Befestigungshülse angeordnet und festgezogen, um die Befestigungshülse - in radialer Richtung gesehen - zu komprimieren und auf dem Mantelrohr festzuklemmen. Bei einem Ausführungsbeispiel der Lenksäulenanordnung, bei welchem ein Klemmring zum Festklemmen der Befestigungshülse vorgesehen ist, ist es möglich, dass die Befestigungshülse fest an dem Gehäuse vorgesehen, insbesondere mit diesem derart verbunden ist, dass keine Relativverlagerung zwischen dem Gehäuse und der Befestigungshülse möglich ist. Sie kann also insbesondere einstückig mit dem Gehäuse oder an diesem starr, beispielsweise durch Verschrauben oder auf andere geeignete Weise, befestigt sein. Es bedarf in diesem Fall nämlich keiner Relativverlagerung zwischen dem Gehäuse und der Befestigungshülse, weil diese durch den Klemmring radial komprimiert und auf dem Mantelrohr festgeklemmt wird.

Die Aufgabe wird auch gelöst, indem ein Mantelrohr mit den Merkmalen des Anspruchs 8 geschaffen wird. Das Mantelrohr ist insbesondere ausgebildet zur Verwendung in einer Lenksäulenanordnung nach einem der zuvor beschriebenen Ausführungsbeispiele. Es zeichnet sich dadurch aus, dass es an einer äußeren Umfangsfläche wenigstens einen radialen Vorsprung aufweist. Der Vorsprung ist vorzugsweise länglich ausgebildet. Dabei verwirklichen sich in Zusammenhang mit dem Mantelrohr die Vorteile, die bereits in Zusammenhang mit der Lenksäulenanordnung beschrieben wurden.

Schließlich wird die Aufgabe gelöst, indem ein Fahrzeug mit den Merkmalen des Anspruchs 9 geschaffen wird. Das Fahrzeug zeichnet sich aus durch eine Lenksäulenanordnung nach einem der zuvor beschriebenen Ausführungsbeispiele. Dabei verwirklichen sich in Zusammenhang mit dem Fahrzeug die Vorteile, die bereits in Zusammenhang mit der Lenksäulenanordnung beschrieben wurden. Das Fahrzeug ist vorzugsweise als Kraftfahrzeug ausgebildet.

Die Erfindung wird im Folgenden anhand der Zeichnung näher erläutert.
Dabei zeigen:
- Fig. 1: eine schematische Längsschnittansicht eines ersten Ausführungsbeispiels einer Lenksäulenanordnung;
- Fig. 2: eine schematische Querschnittsansicht eines zweiten Ausführungsbeispiels der Lenksäulenanordnung, und
- Fig. 3: eine schematische Detailansicht eines dritten, erfindungsgemäßen Ausführungsbeispiels der Lenksäulenanordnung.

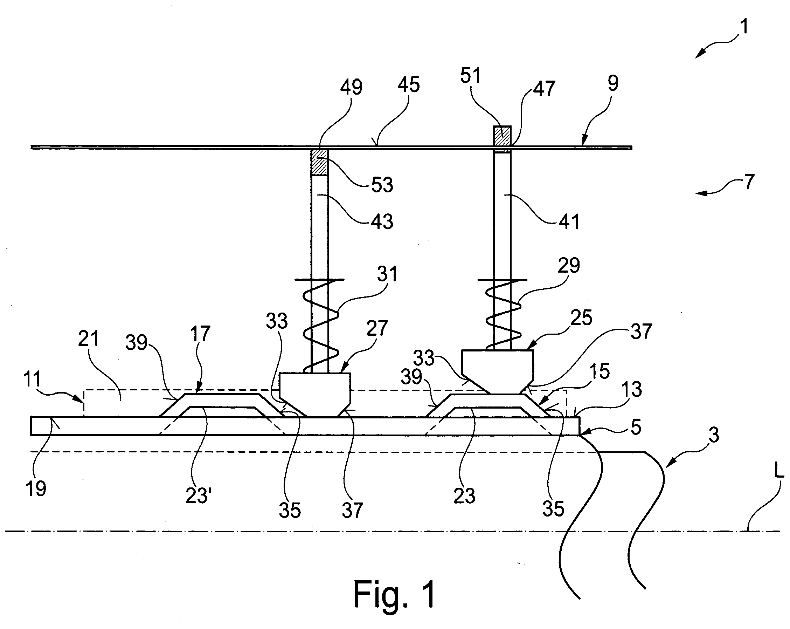

Figur 1 zeigt eine schematische Längsschnittdarstellung eines ersten Ausführungsbeispiels einer Lenksäulenanordnung 1. Diese weist eine Lenkspindel 3 und ein Mantelrohr 5 auf, wobei das Mantelrohr 5 die Lenkspindel 3 - in Umfangsrichtung gesehen - umgreift.

Die Lenkspindel 3 ist relativ zu dem Mantelrohr 5 um eine Längsachse L drehbar gelagert. Vorzugsweise ist das Mantelrohr 5 raumfest angeordnet, wobei die Lenkspindel 3 in diesem und relativ zu dem Mantelrohr 5 um die Längsachse L drehbar gelagert ist. Dabei ist es möglich, dass die Lenkspindel 3 in dem Mantelrohr 5 drehbar gelagert ist. Alternativ ist es möglich, dass die Lenkspindel 3 an einem anderen Teil, insbesondere an einem Teil eines Fahrzeugs, welches die Lenksäulenanordnung 1 aufweist, drehbar gelagert ist. Das Mantelrohr 5 stützt sich dagegen vorzugsweise an einem Teil des Fahrzeugs, welches die Lenksäulenanordnung 1 aufweist, ab, sodass es dort raumfest gehalten ist.

Die Lenksäulenanordnung 1 weist außerdem ein Schaltermodul 7 auf, welches ein Gehäuse 9 und eine an dem Gehäuse 9 angeordnete Befestigungshülse 11 aufweist. Die Befestigungshülse 11 ist - in radialer Richtung gesehen, mithin in einer Richtung, die senkrecht auf der Längsachse L steht - zumindest bereichsweise komprimierbar, und sie ist so ausgebildet, dass das Schaltermodul 7 mit der Befestigungshülse 11 auf das Mantelrohr 5 aufsteckbar und auf diesem festklemmbar ist. Hierzu weist die Befestigungshülse 11 vorzugsweise einen Innendurchmesser auf, der geringfügig größer ist als ein Außendurchmesser des Mantelrohrs 5, sodass die Befestigungshülse 11 über das Mantelrohr 5 geschoben werden kann. Wird die Befestigungshülse 11 bereichsweise komprimiert, verringert sich ihr Innendurchmesser in dem komprimierten Bereich, sodass die Befestigungshülse 11 auf das Mantelrohr 5 geklemmt wird. Hierdurch ist insbesondere eine axiale Festlegung des Schaltermoduls 7 relativ zu dem Mantelrohr 5 herstellbar.

Die Befestigungshülse 11 ist vorzugsweise an dem Gehäuse 9 befestigt. Es ist aber auch ein Ausführungsbeispiel möglich, bei welchem die Befestigungshülse 11 einstückig mit dem Gehäuse 9 vorgesehen ist. Besonders bevorzugt ist die Befestigungshülse 11 weitgehend zentral an dem Gehäuse 9 vorgesehen, wobei bevorzugt ein Schwerpunkt des Schaltermoduls 7 und insbesondere auch des Gehäuses 9 in etwa auf der Längsachse L liegt.

Vorzugsweise umgibt die Befestigungshülse 11 eine Einstecköffnung des Gehäuses 9 für das Mantelrohr 5. Die Einstecköffnung fluchtet bevorzugt mit einer Verschraubungsöffnung für eine Lenkradschraube, die von einer der Einstecköffnung gegenüberliegenden Seite in das Gehäuse 9 koaxial eingeschraubt werden kann, um ein Lenkrad auf der Lenkspindel 3 zu befestigen. Dabei wirkt die Lenkradschraube bevorzugt zugleich mit dem Gehäuse 9 zusammen, um das Schaltermodul 7 auf dem Mantelrohr 5 festzulegen.

Dabei ist bevorzugt vorgesehen, dass eine innere Umfangsfläche des Gehäuses 9 zu dem Mantelrohr 5 hin leicht konisch erweitert ausgebildet ist, wobei es an einer formnegativen äußeren Umfangsfläche der Befestigungshülse 11 anliegt. Wird die Lenkradschraube angezogen, drängt sie das Gehäuse 9 vorzugsweise in Richtung der Längsachse L derart, dass aufgrund der Konizität der äußeren Umfangsfläche der Befestigungshülse 11 und der inneren Umfangsfläche des Gehäuses 9 die Wirkung eines Keilgetriebes entsteht, wodurch die Befestigungshülse 11 zumindest bereichsweise komprimiert und auf das Mantelrohr 5 geklemmt wird.

Das Mantelrohr 5 weist an einer äußeren Umfangsfläche 13 wenigstens einen radialen Vorsprung, hier einen ersten radialen Vorsprung 15 sowie einen zweiten radialen Vorsprung 17 auf, wobei sich die radialen Vorsprünge 15, 17 von der äußeren Umfangsfläche 13 ausgehend in radialer Richtung von der Längsachse L weg erstrecken. Sie springen also von der äußeren Umfangsfläche 13 radial nach außen vor.

Die Befestigungshülse 11 weist an einer inneren Umfangsfläche 19 wenigstens eine sich - in Längsrichtung gesehen - erstreckende Führungsnut 21 auf. Dabei zeigt sich, dass die radialen Vorsprünge 15, 17 bei aufgestecktem Schaltermodul 7 auf dem Mantelrohr 5 in die Führungsnut 21 eingreifen. Dabei ist die Führungsnut 21 derart auf die radialen Vorsprünge 15, 17 abgestimmt, dass sich eine - in Umfangsrichtung gesehen - spielfreie Anordnung des Schaltermoduls 7 auf dem Mantelrohr 5 ergibt.

Dabei spricht eine Umfangsrichtung eine Richtung an, welche die Längsachse L konzentrisch umgreift.

Durch das Eingreifen der radialen Vorsprünge 15, 17 in die Führungsnut 21 kann so effizient und spielfrei vermieden werden, dass das Schaltermodul 7 relativ zu dem Mantelrohr 5 verdreht wird. Auf diese Weise ist das Schaltermodul 7 raumfest angeordnet, wobei die Lenkspindel 3 insgesamt relativ zu dem Mantelrohr 5 und zu dem Schaltermodul 7 drehbar gelagert ist. Die spielfreie Anordnung des Schaltermoduls 7 auf dem Mantelrohr 5 ist dabei nicht zuletzt entscheidend für die Funktionsfähigkeit eines in das Schaltermodul 7 integrierten Lenkwinkelsensors, der wesentlicher Bestandteil einer vorzugsweise in ein Fahrzeug integrierten Müdigkeitserkennung ist. Weiterhin ist die Spielfreiheit wichtig für den Lenkkomfort eines Fahrers des Fahrzeugs.

Zur Festlegung des Schaltermoduls 7 auf dem Mantelrohr 5 in Umfangsrichtung sind bei herkömmlichen Lenksäulenanordnungen 1 typischerweise in das Gehäuse 9 integrierte Raststeine vorgesehen, welche in Nuten an dem Mantelrohr 5 eingreifen. Diese fordern jedoch einen relativ großen Bauraum in dem Gehäuse 9, sodass das Mantelrohr 5 mit einem geringen Durchmesser ausgebildet werden muss.

Die hier vorgeschlagene Lenksäulenanordnung 1 ist dagegen völlig frei von solchen in dem Gehäuse 9 gelagerten Raststeinen, die einer Festlegung des Schaltermoduls 7 in Umfangsrichtung dienen. Daher wird der hierfür erforderliche Bauraum eingespart, und es muss an dem Gehäuse 9 lediglich die Führungsnut 21 vorgesehen werden. Die der Fixierung in Umfangsrichtung dienenden radialen Vorsprünge 15, 17 sind vielmehr an dem Mantelrohr 5 vorgesehen, sodass dieses größer ausgebildet sein kann, als dies bekannt ist. Hierdurch wird seine Steifigkeit und Eigenfrequenz erhöht, was für den Fahrer fühlbare Vibrationen verringert und daher den Lenkkomfort steigert. Zugleich dient die steifere Ausbildung der Lenksäulenanordnung 1 auch der Sicherheit des Fahrzeugs und dessen Insassen.

Bei einem bevorzugten Ausführungsbeispiel sind die Vorsprünge 15, 17 an der äußeren Umfangsfläche 13 ausgeformt, ausgestanzt oder ausgeprägt. Es ist allerdings auch möglich, dass die Vorsprünge 15, 17 als separate Elemente auf dem Mantelrohr 5 befestigt sind, wobei sie insbesondere an die äußere Umfangsfläche 13 angelötet, angeschweißt, angeklebt oder angespritzt sein können.

Es zeigt sich, dass bei dem in Figur 1 dargestellten Ausführungsbeispiel an dem Mantelrohr 5 zwei Vorsprünge 15, 17 vorgesehen sind, die - in Längsrichtung gesehen - zueinander versetzt und insbesondere axial hintereinander angeordnet sind, wobei sie in die gleiche Führungsnut 21 eingreifen. Dies verbessert und intensiviert einen Klemmeffekt der Befestigungshülse 11 auf dem Mantelrohr 5 und erhöht die Steifigkeit der Lenksäulenanordnung 1 sowie auch die spielfreie Anordnung durch eine Verlängerung der Abstützung und Führung des Schaltermoduls 7 auf dem Mantelrohr 5.

Zusätzlich oder alternativ ist vorzugsweise wenigstens ein dritter Vorsprung vorgesehen, der zu den Vorsprüngen 15, 17 - in Umfangsrichtung gesehen - versetzt angeordnet ist, insbesondere entlang einer Durchmesserlinie gesehen gegenüberliegend oder aus der 180°-Position heraus geringfügig versetzt, um eine eindeutige Montageposition für das Schaltermodul 7 auf dem Mantelrohr 5 vorzugeben. Dabei weist die Befestigungshülse 11 auch für diesen wenigstens einen weiteren Vorsprung bevorzugt eine Führungsnut auf, die sich in Längsrichtung erstreckt, und in welche der wenigstens eine weitere Vorsprung eingreift. Rein beispielhaft sind in Figur 1 zwei weitere radiale Vorsprünge 23, 23' dargestellt. Diese sind - in Umfangsrichtung gesehen - relativ zu den radialen Vorsprüngen 15, 17 versetzt angeordnet, beide jedoch wiederum relativ zueinander in der gleichen Winkelposition, sodass sie in eine nicht dargestellte, gemeinsame weitere Führungsnut an der Befestigungshülse 11 eingreifen. Dabei sind die zusätzlichen Vorsprünge 23, 23' hier - in Längsrichtung gesehen - nicht zu den ersten und zweiten radialen Vorsprüngen 15, 17 versetzt angeordnet. Es ist aber ein Ausführungsbeispiel möglich, bei welchem weitere, sowohl axial als auch in Umfangsrichtung versetzte Vorsprünge vorgesehen sind.

Das Schaltermodul 7 weist wenigstens ein Rastelement auf, wobei in Figur 1 zwei Rastelemente 25, 27 dargestellt sind. Diese greifen von radial außen - mithin in Figur 1 von oben - in die Führungsnut 21 ein und sind in dem Gehäuse 9 - in radialer Richtung gesehen - verlagerbar gehalten. Die Rastelemente 25, 27 sind mittels Druckfedern 29, 31 radial nach innen, also zu der Längsachse L hin, federbelastet und bevorzugt vorgespannt, wobei sich die Druckfedern 29, 31 in dem Gehäuse 9 einerseits und an den Rastelementen 25, 27 andererseits abstützen. Die Rastelemente 25, 27 wirken mit den Vorsprüngen 15, 17 zusammen, um das Schaltermodul 7 auf dem Mantelrohr 5 axial zu verrasten. Dabei rasten sie beim Aufschieben des Schaltermoduls 7 auf das Mantelrohr 5 - in Figur 1 von rechts nach links - hinter den Vorsprüngen 15, 17 ein. Wird das Schaltermodul 7 auf das Mantelrohr 5 aufgeschoben, gleiten die Rastelemente 25, 27 an den Vorsprüngen 15, 17 vorbei, werden dabei von diesen angehoben und fallen aufgrund der Vorspannung durch die Druckfedern 29, 31 hinter den Vorsprüngen 15, 17 - in Figur 1 also links von diesen - wieder in ihre entspannte oder auch vorgespannte Ausgangslage in der Führungsnut 21 zurück.

Weist die Befestigungshülse 11 mehr als eine Führungsnut 21 auf, ist bevorzugt in jeder Führungsnut mindestens ein Rastelement 25, 27 vorgesehen.

Die Rastelemente 25, 27 weisen vorzugsweise auf ihrer - in Aufschubrichtung auf das Mantelrohr 5 gesehen - den Vorsprüngen 15, 17 zugewandten Seite eine erste Schrägfläche 33 auf, die eine relativ geringe Steigung aufweist, mithin einen vergleichsweise kleinen Winkel mit der Längsachse L einschließt. dies erleichtert die radiale Hubbewegung der Rastelemente 25, 27 beim Aufschieben des Schaltermoduls 7 auf das Mantelrohr 5. Vorzugsweise weisen die Vorsprünge 15, 17 jeweils eine erste, den ersten Schrägflächen 33 zugewandte Anlauffläche 35 auf, die wie die ersten Schrägflächen 33 eine vergleichsweise geringe Steigung aufweist. Vorzugsweise sind die Steigungen der ersten Anlaufflächen 35 auf die Steigungen der ersten Schrägflächen 33 abgestimmt, sodass diese im Sinne eines Keilgetriebes aufeinander gleiten, wodurch sich eine besonders leichte Hubbewegung der Rastelemente 25, 27 im Bereich der Vorsprünge 15, 17 beim Aufschieben des Schaltermoduls 7 auf das Mantelrohr 5 ergibt.

Auf einer den ersten Schrägflächen 33 abgewandten Seite weisen die Rastelemente 25, 27 jeweils eine zweite Schrägfläche 37 auf, die eine größere Steigung als die ersten Schrägflächen 33 aufweist, insbesondere also einen größeren Winkel mit der Längsachse L einschließt. Somit ist eine Abzugsbewegung des Schaltermoduls 7 von dem Mantelrohr 5 entgegen der Aufschubrichtung - in Figur 1 also von links nach rechts - erschwert, sobald die Rastelemente 25, 27 hinter den Vorsprüngen 15, 17 - in Figur 1 links von diesen - eingerastet sind.

Die Vorsprünge 15, 17 weisen bevorzugt jeweils den ersten Anlaufflächen 35 abgewandt angeordnete zweite Anlaufflächen 39 auf, die vorzugsweise ebenfalls eine größere Steigung aufweisen als die ersten Anlaufflächen 35. Besonders bevorzugt ist vorgesehen, dass die zweiten Anlaufflächen 39 in ihrer Steigung nicht mit den zweiten Schrägflächen 37 übereinstimmen, sodass sich hier kein flächiges Keilgetriebe ergibt, sondern vielmehr nur eine Linienberührung, was die Abzugsbewegung des Schaltermoduls 7 von dem Mantelrohr 5 weiter erschwert.

In Figur 1 ist das Schaltermodul 7 beim Aufschieben auf das Mantelrohr 5 dargestellt, wobei das zweite Rastelement 27 noch nicht mit dem zweiten Vorsprung 17 in Eingriff ist, wobei das erste Rastelement 25 gerade über den ersten Vorsprung 15 gleitet und von diesem in seine angehobene Stellung verlagert ist.

Das Gehäuse 9 ist in seiner Rastposition auf dem Mantelrohr 5 angeordnet, wenn beide Rastelemente 25, 27 hinter den Vorsprüngen 15, 17 - in Figur 1 also links von diesen - in ihre Ausgangsposition in der Führungsnut 21 zurückgefallen sind.

Durch die mit den Vorsprüngen 15, 17 zusammenwirkenden Rastelemente 25, 27 wird ein Abfallen oder ungewolltes Entfernen des Schaltermoduls 7 von dem Mantelrohr 5 verhindert, bevor die Befestigungshülse 11 endgültig auf das Mantelrohr 5 geklemmt ist.

Die Rastelemente 25, 27 sind hier als Raststeine ausgebildet, an denen radial außen - in Figur 1 oberseitig - jeweils ein Stift 41, 43 befestigt ist. Die Stifte 41, 43 sind vorzugsweise in einer an dem Gehäuse 9 vorgesehenen, nicht dargestellten Buchse oder einem Doppellager - in radialer Richtung gesehen verlagerbar - gehalten und geführt. Dabei weisen die Stifte 41, 43 jeweils einen nicht dargestellten Anschlag auf, der ein Herausfallen aus der Buchse beziehungsweise dem Doppellager verhindert. Die Stifte 41, 43 tragen die Druckfedern 29, 31, die vorzugsweise als Schraubenfedern ausgebildet sind und die Stifte 41, 43 umgreifen. Dabei stützen sich die Druckfedern 29, 31 vorzugsweise einerseits an den Rastelementen 25, 27, insbesondere an den Raststeinen, und andererseits an der Buchse oder einem inneren Lager des Doppellagers ab.

An dem Gehäuse 9 sind an einer Außenfläche 45 Durchgangsbohrungen 47, 49 angeordnet, die mit den Stiften 41, 43 fluchten, wobei diese vorzugsweise durch die Durchgangsbohrungen 47, 49 hindurchgreifen können. Hierzu sind die Innendurchmesser der Durchgangsbohrungen 47, 49 vorzugsweise geringfügig größer ausgebildet als den Rastelementen 25, 27 abgewandte Enden 51, 53 der Stifte 41, 43.

Führen die Rastelemente 25, 27 beim Aufschieben des Schaltermoduls 7 auf das Mantelrohr 5 im Bereich der Vorsprünge 15, 17 ihre radiale Hubbewegung aus, folgen die Stifte 41, 43 dieser Hubbewegung der Rastelemente 25, 27. Dabei tauchen die freien Enden 51, 53 der Stifte 41, 43 durch die Durchgangsbohrungen 47, 49 hindurch, wodurch die Enden 51, 53 zeitweise von außen, also von außerhalb des Gehäuses 9, sichtbar werden, indem sie über die Außenfläche 45 vorstehen. Um die Sichtbarkeit der Enden 51, 53 zu erhöhen, sind diese bevorzugt farbig markiert. In Aufschieberichtung gesehen hinter den Vorsprüngen 15, 17 fallen die Rastelemente 25, 27 in ihre entspannte oder vorgespannte Ausgangsposition in der Führungsnut 21 zurück, wodurch auch die Stifte 41, 43 in das Gehäuse 9 zurückfallen. Vorzugsweise schließen in dieser Position die Enden 51, 53 bündig mit der Außenfläche 45 ab.

In Figur 1 ist dargestellt, dass das erste Ende 51 des ersten Stifts 41 gerade über die Außenfläche 45 vorsteht, weil das erste Rastelement 25 auf dem ersten Vorsprung 15 gleitet und durch diesen insoweit radial angehoben ist. Das zweite Rastelement 27 ist dagegen in seiner entspannten oder vorgespannten Position in der Führungsnut 21 angeordnet und noch nicht mit dem zweiten Vorsprung 17 in Eingriff. Daher steht auch das zweite Ende 53 des zweiten Stifts 43 nicht über die Außenfläche 45 über, sondern ist in der zweiten Durchgangsbohrung 49 bündig mit der Außenfläche 45 angeordnet. Die Darstellung gemäß Figur 1 ist beispielhaft. Vorzugsweise sind die Rastelemente 25, 27 einerseits und die Vorsprünge 15, 17 andererseits im Bereich einer gemeinsamen Führungsnut 21 so angeordnet, dass die Rastelemente 25, 27 gleichzeitig mit den Vorsprüngen 15, 17 in Eingriff kommen, über diese hinweggleiten und hinter diesen einrasten. Dabei wird bevorzugt eine Rastposition verwirklicht, in der alle Rastelemente 25, 27 sicher unmittelbar hinter den Vorsprüngen 15, 17 angeordnet sind und unter Kontakt an diesen anliegen, sodass sich in der Montageposition des Schaltermoduls 7 für alle Rastelemente 25, 27 eine definierte und stabile Rastposition ergibt. Selbstverständlich ist aber auch ein Ausführungsbeispiel möglich, bei welchem die Rastelemente 25, 27 und die Vorsprünge 15, 17 einer Führungsnut 21 so relativ zueinander angeordnet sind, wie dies in Figur 1 dargestellt ist, oder in anderer Weise.

Durch den hier beschriebenen Mechanismus der mit den Rastelementen 25, 27 zusammenwirkenden Stifte 41, 43 und deren Enden 51, 53, ist es möglich, dass ein das Schaltermodul 7 auf dem Mantelrohr 5 montierender Werker sehen, hören und auch fühlen kann, wann die richtige Montageposition des Schaltermoduls 7 auf dem Mantelrohr 5 erreicht ist. Insbesondere sind die über die Außenfläche 45 hervorragenden Enden 51, 53 nicht nur optisch sichtbar, sondern auch haptisch tastbar.

Ist die korrekte Montageposition erreicht und das Schaltermodul 7 mittels der Rastelemente 25, 27 auf dem Mantelrohr 5 eingerastet, kann durch den Werker das Lenkrad aufgesetzt und befestigt werden, wobei die Lenkradschraube angezogen wird. Hierbei wird vorzugsweise zugleich auch die Befestigungshülse 11 auf das Mantelrohr 5 geklemmt, bis absolute Spielfreiheit gegeben ist. Alternativ ist es möglich, dass die Befestigungshülse 11 mittels eines Klemmrings auf das Mantelrohr 5 geklemmt wird, wobei der Klemmring vorzugsweise an einem dem Lenkrad abgewandten Ende der Befestigungshülse 11 vorgesehen ist.

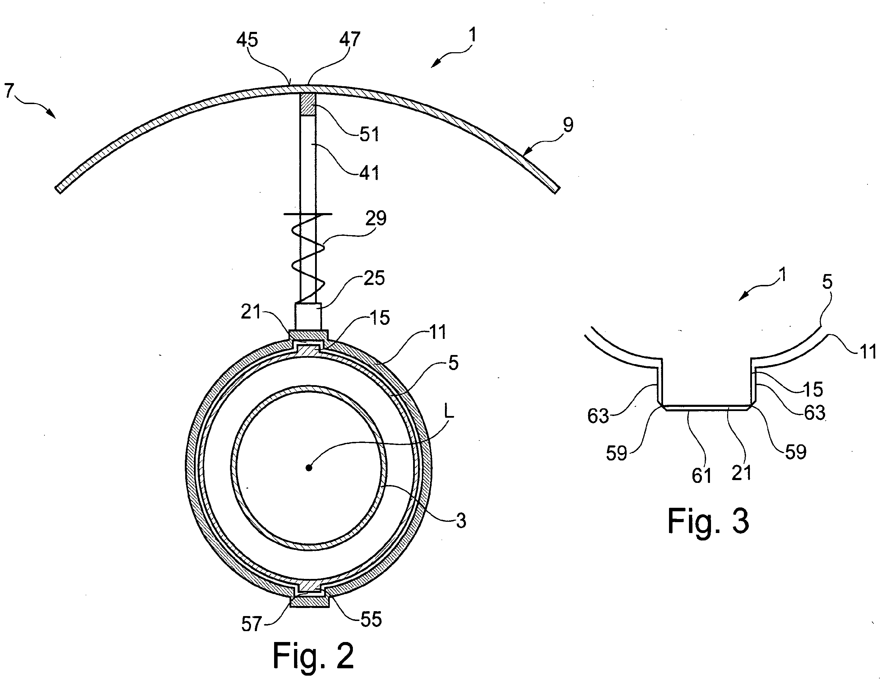

Figur 2 zeigt eine schematische Querschnittsansicht eines zweiten Ausführungsbeispiels der Lenksäulenanordnung 1. Gleiche und funktionsgleiche Elemente sind mit gleichen Bezugszeichen versehen, sodass insofern auf die vorangegangene Beschreibung verwiesen wird. Hier ist insbesondere dargestellt, wie der Vorsprung 15 in die Führungsnut 21 eingreift, wodurch die Befestigungshülse 11 des Schaltermoduls 7 - in Umfangsrichtung gesehen - auf dem Mantelrohr 5 festgelegt wird.

Bei dem zweiten Ausführungsbeispiel ist ein weiterer Vorsprung 55 an dem Mantelrohr 5 vorgesehen, wobei dieser in eine entsprechende Führungsnut 57 der Befestigungshülse 11 eingreift. Dabei zeigt sich, dass hier die Vorsprünge 15, 55 einander diametral gegenüberliegend angeordnet sind. Dadurch ergibt sich eine sehr gleichmäßige Einleitung von Drehmomenten aus dem Schaltermodul 7 in das Mantelrohr 5 oder umgekehrt. Zugleich zeigt sich aber auch, dass grundsätzlich zwei verschiedene Montagepositionen des Schaltermoduls auf dem Mantelrohr 5 möglich sind. Dies ist unschädlich, wenn aus anderen Gründen, beispielsweise aufgrund der Anordnung des Schaltermoduls in einem Cockpit des Fahrzeugs, in dem die Lenksäulenanordnung 1 Verwendung findet, nur eine Anordnung des Schaltermoduls 7 möglich ist.

Um eine eindeutige Positionierung des Schaltermoduls 7 auf dem Mantelrohr 5 zu ermöglichen, ist bei einem anderen Ausführungsbeispiel bevorzugt vorgesehen, dass der weitere Vorsprung 55 nicht direkt diametral dem ersten Vorsprung 15 gegenüberliegt, sondern vielmehr - in Umfangsrichtung gesehen - etwas versetzt zu der gegenüberliegenden Position angeordnet ist, sodass die Rotationssymmetrie um die Längsachse L durch die Vorsprünge 15, 55 gebrochen ist. Entsprechend ist dann auch die Führungsnut 57 an der Befestigungshülse 11 versetzt angeordnet, wobei letztlich nur noch eine mögliche Montageposition des Schaltermoduls 7 auf dem Mantelrohr 5 resultiert.

Selbstverständlich ist es möglich, dass an dem Mantelrohr 5 weitere Vorsprünge und auf der Befestigungshülse 11 weitere entsprechende Führungshülsen vorgesehen sind, die - in Umfangsrichtung gesehen - symmetrisch oder asymmetrisch angeordnet sein können.

Der seitliche Abstand zwischen den Seitenwandungen der Führungsnut 21 und dem Vorsprung 15 sowie zwischen der Führungsnut 57 und dem Vorsprung 55 ist in Figur 2 übertrieben groß dargestellt. In Wirklichkeit sind die Abmessungen der Führungsnuten 21, 57 und der Vorsprünge 15, 55 derart aufeinander abgestimmt, dass sich jedenfalls in geklemmten Zustand der Befestigungshülse 11 auf dem Mantelrohr 5 eine spielfreie Anordnung des Schaltermoduls 7 ergibt.

Um das Spiel des Schaltermoduls 7 auf dem Mantelrohr 5 - in Umfangsrichtung - gänzlich aufzuheben, weisen die Führungsnuten 21, 57 eine trapezförmige Kontur mit schräg zueinander angeordneten Seitenwandungen auf, sodass bei einer Kompression der Befestigungshülse 11 Längsseiten der Vorsprünge 15, 55, die in Längsrichtung des Mantelrohrs 5 verlaufen, von den schrägen Seitenwandungen der Führungsnuten 21, 57 geklemmt werden.

Statt insgesamt schräger Seitenwandungen ist es möglich, dass die Führungsnuten 21, 57 abgeschrägte Ecken, mithin Fasen aufweisen.

Figur 3 zeigt schematisch ein solches drittes, erfindungsgemäßes Ausführungsbeispiel der Lenksäulenanordnung 1. Gleiche und funktionsgleiche Elemente sind mit gleichen Bezugszeichen versehen, sodass insofern auf die vorangegangene Beschreibung verwiesen wird. Die Führungsnut 21 weist hier zwischen einem Nutgrund 61 und sich in Längsrichtung - mithin senkrecht zur Bildebene von Figur 3 - erstreckenden Seitenwandungen 63 jeweils eine Fase 59 auf. Mit den schrägen Wandabschnitten beziehungsweise Fasen 59 wird die Führungsnut 21 bei einer radialen Komprimierung der Befestigungshülse 11 auf den Vorsprung 15 geklemmt, sodass schließlich kein Spiel mehr für das Mantelrohr 5 in der Befestigungshülse 11 beziehungsweise für die Befestigungshülse 11 auf dem Mantelrohr 5 verbleibt.

Vorzugsweise weist jede Führungsnut 21 der Befestigungshülse 11 eine solche trapezförmige Kontur beziehungsweise schräge Seitenwandungen oder Fasen 59 auf. Insgesamt ergibt sich so eine besonders steife Lagerung des Schaltermoduls 7 auf dem Mantelrohr 5 und damit eine Erhöhung der Eigenfrequenz der Lenksäulenanordnung 1.

Insgesamt zeigt sich, dass die Lenksäulenanordnung 1 in einfacher Weise eine Verdrehsicherung des Schaltermoduls 7 auf dem Mantelrohr 5 schafft, mittels derer eine erhöhte Steifigkeit und Eigenfrequenz des Mantelrohrs 5 erreicht wird. Dabei ergibt sich eine robuste Befestigung, die auch hohen Drehmomenten standhält. Dabei kann die Lenksäulenanordnung 1 ohne Änderungen in bestehende Montageabläufe integriert werden.

## Patentansprüche

1. Lenksäulenanordnung (1), mit
- einer Lenkspindel (3) und einem die Lenkspindel (3) umgreifenden Mantelrohr (5), wobei
- die Lenkspindel (3) relativ zu dem Mantelrohr (5) um eine Längsachse (L) drehbar gelagert ist, und mit
- einem Schaltermodul (7), das ein Gehäuse (9) und eine an dem Gehäuse (9) vorgesehene Befestigungshülse (11) aufweist, wobei
- die Befestigungshülse (11) so ausgebildet ist, dass das Schaltermodul (7) mit der Befestigungshülse (11) auf das Mantelrohr (5) aufsteckbar und auf diesem festklemmbar ist,
- wobei das Mantelrohr (5) an einer äußeren Umfangsfläche (13) wenigstens einen radialen Vorsprung (15,17;23,23';55) aufweist,
- wobei die Befestigungshülse (11) an einer inneren Umfangsfläche (19) wenigstens eine sich - in Längsrichtung gesehen - erstreckende Führungsnut (21;57) aufweist, wobei der radiale Vorsprung (15,17;23,23';55) in die Führungsnut (21;57) eingreift, wenn das Schaltermodul (7) auf das Mantelrohr (5) aufgesteckt ist,
**dadurch gekennzeichnet,**
**dass** die Führungsnut (21;57) - im Querschnitt gesehen - eine trapezförmige Kontur aufweist, wobei die Führungsnut (21;57) mit den schrägen Seitenwandungen oder Wandabschnitten auf die Längsseiten oder Längskanten des Vorsprungs (15,17;23,23';55), die in Längsrichtung des Mantelrohrs (5) verlaufen, bei auf die Lenkspindel aufgesetztem Lenkrad durch Anziehen einer Lenkradschraube in einer Relativbewegung zwischen dem Gehäuse und der Befestigungshülse und dadurch entstehenden radialen Komprimierung der Befestigungshülse unter gänzlicher Aufhebung des Spiels des Vorsprungs (15,17;23,23';55) in der Führungsnut (21;57) geklemmt wird.

2. Lenksäulenanordnung (1) nach Anspruch 1, **dadurch gekennzeichnet, dass** der radiale Vorsprung (15,17;23,23';55) eine längliche Form aufweist.

3. Lenksäulenanordnung (1) nach einem der vorhergehenden Ansprüche, **dadurch gekennzeichnet, dass** der radiale Vorsprung (15,17;23,23';55) einstückig mit dem Mantelrohr (5) ausgebildet ist, wobei der Vorsprung (15,17;23,23';55) bevorzugt an der äußeren Umfangsfläche (13) ausgeprägt, teilweise ausgestanzt oder ausgeformt ist, oder dass der Vorsprung (15,17;23,23';55) als separates Element auf dem Mantelrohr (5) befestigt, insbesondere an dieses angelötet, angeschweißt, angeklebt oder angespritzt ist.

4. Lenksäulenanordnung (1) nach einem der vorhergehenden Ansprüche, **dadurch gekennzeichnet, dass** das Mantelrohr (5) mindestens zwei radiale Vorsprünge (15,17;23,23';55) aufweist, wobei die Vorsprünge (15,17;23,23';55) - entlang einer Durchmesserlinie gesehen - gegenüberliegend oder - in Umfangsrichtung gesehen - zueinander versetzt angeordnet sind, und/oder wobei die Vorsprünge (15,17;23,23';55) - in Längsrichtung gesehen - zueinander versetzt angeordnet sind, wobei die Befestigungshülse (11) bevorzugt wenigstens zwei Führungsnuten (21;57) aufweist, wobei jeder Führungsnut (21;57) wenigstens ein Vorsprung (15,17;23,23';55) zugeordnet ist.

5. Lenksäulenanordnung (1) nach einem der vorhergehenden Ansprüche, **dadurch gekennzeichnet, dass** das Schaltermodul (7) wenigstens ein Rastelement (25,27) aufweist, das von radial außen in die wenigstens eine Führungsnut (21;57) eingreift und - in radialer Richtung gesehen - verlagerbar gehalten ist, wobei das Rastelement (25,27) radial nach innen federbelastet, vorzugsweise vorgespannt ist und mit dem Vorsprung (15,17;23,23';55) zur axialen Verrastung des Schaltermoduls (7) auf dem Mantelrohr (5) zusammenwirkt.

6. Lenksäulenanordnung (1) nach einem der vorhergehenden Ansprüche, **dadurch gekennzeichnet, dass** das Rastelement (25,27) mit einem Stift (41,43) verbunden ist, der - in radialer Richtung gesehen - in dem Gehäuse (9) verlagerbar geführt ist, wobei der Stift (41,43) so angeordnet und ausgebildet ist, dass er eine Durchgangsbohrung (47,49) des Gehäuses (9) nach außen durchgreift, wenn das Rastelement (25,27) - in Längsrichtung gesehen - auf Höhe des Vorsprungs (15,17;23,23';55) angeordnet ist, und dass der Stift (41,43) die Durchgangsbohrung (47,49) nicht durchgreift, wenn das Rastelement (25,27) - in Längsrichtung gesehen - vor oder hinter dem Vorsprung (15,17;23,23';55) angeordnet ist.

7. Lenksäulenanordnung (1) nach einem der vorhergehenden Ansprüche, **dadurch gekennzeichnet, dass** das Schaltermodul (7) ein Keilgetriebe aufweist, durch welches die Befestigungshülse (11) auf dem Mantelrohr (5) festklemmbar ist, oder dass das Schaltermodul (7) einen Klemmring zum Festklemmen der Befestigungshülse (11) auf dem Mantelrohr (5) aufweist.

8. Mantelrohr (5), insbesondere für eine Lenksäulenanordnung (1) nach einem der Ansprüche 1 bis 7, **dadurch gekennzeichnet, dass** das Mantelrohr (5) an einer äußeren Umfangsfläche (13) wenigstens einen vorzugsweise länglichen, radialen Vorsprung (15,17;23,23';55) aufweist.

9. Fahrzeug, insbesondere Kraftfahrzeug, mit einer Lenksäulenanordnung (1) nach einem der Ansprüche 1 bis 7.

## Claims

1. Steering column assembly (1), having:
- a steering spindle (3) and a casing tube (5) engaging around the steering spindle (3), wherein
- the steering spindle (3) is mounted such that it can be rotated relative to the casing tube (5) about a longitudinal axis (L), and having
- a switch module (7) which has a housing (9) and a fixing sleeve (11) provided on the housing (9), wherein
- the fixing sleeve (11) is designed such that the switch module (7) can be slipped, with the fixing sleeve (11), onto the casing tube (5) and clamped thereto,
- wherein the casing tube (5) has, on an outer circumferential surface (13), at least one radial protrusion (15, 17; 23, 23'; 55),
- wherein the fixing sleeve (11) has, on an inner circumferential surface (19), at least one guide groove (21; 57) extending - seen in the longitudinal direction, wherein the radial protrusion (15, 17; 23, 23'; 55) engages in the guide groove (21; 57) when the switch module (7) is slipped onto the casing tube (5),
**characterised in that**
the guide groove (21; 57) - seen in cross-section - has a trapezoidal contour, wherein the guide groove (21; 57) with the inclined side walls or wall portions is clamped onto the longitudinal sides or longitudinal edges of the protrusion (15, 17; 23, 23'; 55), which extend in the longitudinal direction of the casing tube (5), when the steering wheel is slipped onto the steering spindle, by tightening a steering wheel screw, in a relative movement between the housing and the fixing sleeve and radial compression, thereby arising, of the fixing sleeve when the protrusion (15, 17; 23, 23'; 55) is completely play-free in the guide groove (21; 57).

2. Steering column assembly (1) according to claim 1, **characterised in that** the radial protrusion (15, 17; 23, 23'; 55) has an elongated form.

3. Steering column assembly (1) according to one of the preceding claims, **characterised in that** the radial protrusion (15, 17; 23, 23'; 55) is formed integrally with the casing tube (5), wherein the protrusion (15, 17; 23, 23'; 55) is preferably stamped out, partially punched out or formed on the outer circumferential surface (13), or the protrusion (15, 17; 23, 23'; 55) is fixed as a separate element on the casing tube (5), in particular being soldered, welded or stuck to it or injected on it.

4. Steering column assembly (1) according to one of the preceding claims, **characterised in that** the casing tube (5) has at least two radial protrusions (15, 17; 23, 23'; 55), wherein the protrusions (15, 17; 23, 23'; 55) - seen along a diametric line - lying opposite or - seen in the circumferential direction - are arranged offset relative to each other, and / or wherein the protrusions (15, 17; 23, 23'; 55) - seen in the longitudinal direction - are arranged offset relative to each other, wherein the fixing sleeve (11) preferably has at least two guide grooves (21; 57), wherein at least one protrusion (15, 17; 23, 23'; 55) is assigned to each guide groove (21; 57).

5. Steering column assembly (1) according to one of the preceding claims, **characterised in that** the switch module (7) has at least one latch element (25, 27), which engages from radially externally into the at least one guide groove (21; 57) and - seen in the radial direction - is held displaceably, wherein the latch element (25; 27) is spring-loaded radially inwards, preferably pre-tensioned, and cooperates with the protrusion (15, 17; 23, 23'; 55) for axial engagement of the switch module (7) on the casing tube (5).

6. Steering column assembly (1) according to one of the preceding claims, **characterised in that** the latch element (25, 27) is connected to a pin (41, 43), which - seen in the radial direction - is guided displaceably in the housing (9), wherein the pin (41, 43) is arranged and designed in such a way that it engages through a through bore (47, 49) of the housing (9) outwards when the latch element (25, 27) - seen in the longitudinal direction - is arranged at the height of the protrusion (15, 17; 23, 23'; 55), and the pin (41, 43) does not engage through the through bore (47, 49) when the latch element (25, 27) - seen in the longitudinal direction - is arranged in front of or behind the protrusion (15, 17; 23, 23'; 55).

7. Steering column assembly (1) according to one of the preceding claims, **characterised in that** the switch module (7) has a wedge gear, through which the fixing sleeve (11) can be clamped on the casing tube (5), or the switch module (7) has a clamping ring to clamp the fixing sleeve (11) on the casing tube (5).

8. Casing tube (5), in particular for a steering column assembly (1) according to one of claims 1 to 7, **characterised in that** the casing tube (5) has, on an outer circumferential surface (13), at least one, preferably elongated, radial protrusion (15, 17; 23, 23'; 55).

9. Vehicle, in particular motor vehicle, having a steering column assembly (1) according to one of claims 1 to 7.

## Revendications

1. Système de colonne de direction (1) comprenant
- un arbre de direction (3) et un tube fourreau (5) entourant l'arbre de direction (3),
- l'arbre de direction (3) étant monté en rotation par rapport au tube fourreau (5) autour d'un axe longitudinal (L), et
- un module commutateur (7) qui présente un boîtier (9) et une douille de fixation (11) disposée sur le boîtier (9),
- la douille de fixation (11) étant conçue de telle sorte que le module commutateur (7) conjointement avec la douille de fixation (11) puissent s'enficher dans le tube fourreau (5) et s'y fixer,
- le tube fourreau (5) présentant sur une surface circonférentielle (13) extérieure au moins une partie en saillie radiale (15, 17, 23, 23', 55),
- la douille de fixation (11) présentant sur une surface circonférentielle intérieure (19) au moins une rainure de guidage (21, 57) s'étendant dans la direction longitudinale, la partie en saillie radiale (15, 17, 23, 23', 55) se logeant dans la rainure de guidage (21, 57) lorsque le module commutateur (7) s'enfiche dans le tube fourreau (5), **caractérisé en ce que** la rainure de guidage (21, 57) - observée en section transversale - présente un contour trapézoïdale, la rainure de guidage (21, 57) conjointement avec les parois latérales obliques ou des parties de paroi se fixe sur les longs côtés ou sur les bords longs de la partie en saillie (15, 17, 23, 23', 55), qui s'étendent dans la direction longitudinale du fourreau (5), lorsque le volant de direction est placé sur l'arbre de direction dans un mouvement relatif entre le boîtier et la douille de fixation, et une compression radiale la douille de fixation étant ainsi générée par suppression complète du jeu de la partie en saillie (15, 17, 23, 23', 55) dans la rainure de guidage (21, 57).

2. Système de colonne de direction (1) selon la revendication 1, **caractérisé en ce que** la partie en saillie radiale (15, 17, 23, 23', 55) présente une forme allongée.

3. Système de colonne de direction (1) selon l'une quelconque des revendications précédentes, **caractérisé en ce que** la partie en saillie radiale (15, 17, 23, 23', 55) est conçue d'un seul tenant avec le tube fourreau (5), la partie en saillie (15, 17, 23, 23', 55) étant estampée de préférence que la surface circonférentielle extérieure (13), découpée à la presse ou moulée à certains endroits ou **en ce que** la partie en saillie (15, 17, 23, 23', 55) étant fixée comme un élément séparé sur le tube fourreau (5), en particulier, soudée, collée ou injectée sur celui-ci.

4. Système de colonne de direction (1) selon l'une quelconque des revendications précédentes, **caractérisé en ce que** le tube fourreau (5) présente au moins deux parties en saillie radiales (15, 17, 23, 23', 55), les parties en saille (15, 17, 23, 23', 55) - observées le long d'une ligne de diamètre - étant disposées en regard ou - observées dans la direction circonférentielle - étant décalées les unes par rapport aux autres, et/ou les parties en saillie (15, 17, 23, 23', 55) - observées dans la direction longitudinale - sont décalées les unes par rapport aux autres, la douille de fixation (11) présentant de préférence au moins deux rainures de guidage (21, 57), chaque rainure de guidage (21, 57) étant associée au moins à une partie en saillie (15, 17, 23, 23', 55).

5. Système de colonne de direction (1) selon l'une quelconque des revendications précédentes, **caractérisé en ce que** le module commutateur (7) présente au moins un élément de verrouillage (25,27), qui se loge radialement à partir de l'extérieur dans ladite rainure de guidage (21, 57) et - observé dans la direction radiale - est monté mobile, l'élément de verrouillage (25, 27) étant soumis à l'action d'un ressort radialement vers l'intérieur, de préférence est précontraint, et agissant conjointement avec la partie en saillie (15, 17, 23, 23', 55) pour l'encliquetage axial du module commutateur (7) sur le tube fourreau (5).

6. Système de colonne de direction (1) selon l'une quelconque des revendications précédentes, **caractérisé en ce que** l'élément de verrouillage (25, 27) est reliée à une tige (41, 43), qui - observée dans la direction radiale - est introduite mobile dans le boîtier (9), la tige (41, 43) étant conçue et disposée de telle sorte qu'elle traverse un orifice de passage (47, 49) du boîtier (9) vers l'extérieur, lorsque l'élément de verrouillage (25,27) - observé dans la direction longitudinale - est disposé à la hauteur de la partie en saillie (15, 17, 23, 23', 55) et que la tige (41, 43) ne pénètre pas dans l'orifice de passage (47, 49) lorsque l'élément de verrouillage (25, 27) - observé dans la direction longitudinale - est disposé avant ou après la partie en saillie (15, 17, 23, 23', 55).

7. Système de colonne de direction (1) selon l'une quelconque des revendications précédentes, **caractérisé en ce que** le module commutateur (7) présente un mécanisme de blocage qui permet de fixer la douille de fixation (11) sur le tube fourreau (5) ou **en ce que** le module commutateur (7) présente un anneau de serrage destiné à fixer la douille de fixation (11) sur le tube fourreau (5).

8. Tube fourreau (5), en particulier pour un système de colonne de direction (1) selon l'une quelconque des revendications 1 à 7, **caractérisé en ce que** le tube fourreau (5) présente sur une surface circonférentielle extérieure (13) au moins une partie en saillie (15, 17, 23, 23', 55) radiale, de préférence allongée.

9. Véhicule, en particulier véhicule automobile, comprenant un système de colonne de direction (1) selon l'une quelconque des revendications 1 à 7.
